# EUROPEAN PATENT SPECIFICATION

(11) **EP 2 695 782 B1**
(45) Date of publication and mention of the grant of the patent: **10.09.2014**
(21) Application number: 12194826.9
(22) Date of filing: 29.11.2012
(51) Int. Cl.: B60W 10/02, B60W 10/06, F16H 61/04

(54) **Automatic transmission apparatus and straddle-type vehicle equipped with the apparatus**
Automatikgetriebe und Sattelfahrzeug mit dem Automatikgetriebe
Appareil de transmission automatique et véhicule de type à selle équipé de l'appareil

(30) Priority: 10.08.2012 JP 2012178440
(43) Date of publication of application: 12.02.2014
(73) Proprietor: Yamaha Hatsudoki Kabushiki Kaisha, Iwata-shi, Shizuoka 438-8501 (JP)
(72) Inventor: MURAYAMA, Takuya c/o Yamaha Hatsudoki Kabushiki Kaisha, Iwata-shi, Shizuoka 438-8501 (JP)
(74) Representative: Grünecker, Kinkeldey, Stockmair & Schwanhäusser

(56) References cited:
- EP-A1- 1 906 062
- EP-A1- 2 202 123
- WO-A1-03/024736
- JP-A- 2006 169 966
- US-A- 5 091 854
- US-A1- 2002 148 309

## Description

The present invention relates to an automatic transmission apparatus and a straddle-type vehicle equipped with the automatic transmission apparatus.

Automatic transmission apparatuses equipped with a multi-geared type transmission mechanism, a clutch, and an actuator for driving the clutch and the transmission mechanism are conventionally known. In the automatic transmission apparatus, a control device such as ECU outputs a gear shifting command according to the driving condition of a straddle-type vehicle so that the actuator is driven. Alternatively, in the automatic transmission apparatus, the rider allows the gear shifting command to output by operating a shift switch or the like so that the actuator is driven. The actuator performs a series of operations, such as causing the clutch to disengage, subsequently changing the gear position of the transmission mechanism, and thereafter causing the clutch to engage.

When the clutch is disengaged, a rotational speed difference arises between a drive side rotator and a driven side rotator of the clutch. Particularly in the case where the clutch is disengaged when the accelerator is open, the rotational speed difference between the drive side rotator and the driven side rotator becomes great because the load on the drive side rotator is lost at that time. As a consequence, what is called engine revving-up is likely to occur. Conventionally, it is known that, as disclosed in JP 2006-169966 A, for example, an ignition timing retard control process is executed during disengagement of the clutch in order to prevent such engine revving-up.

In the automatic transmission apparatus disclosed in the above-mentioned publication, when the rider turns the shift-up switch on, a clutch actuator is actuated and a disengagement operation of the clutch is started. Thereafter, the ignition timing retard control process is started. Then, the gear position of the transmission mechanism is changed, and a clutch engagement operation is started. When the clutch engagement operation is started, the clutch rotational frequency difference (hereinafter also referred to as the "clutch rotational speed difference") gradually becomes smaller. When the clutch rotational speed difference becomes smaller than a retard reduction permitting clutch rotational speed difference, the ignition timing retard amount is gradually reduced to return to the normal control. In other words, at the time point at which the clutch rotational speed difference becomes smaller than the retard reduction permitting clutch rotational speed difference, the returning from the ignition timing retard control process is started. The retard reduction permitting clutch rotational speed difference is set according to the degree of opening of the accelerator.

When returning to the normal control process from the ignition timing retard control process, shock such as to impair the riding comfort may occur. However, since the automatic transmission apparatus described in the foregoing publication gradually reduces the ignition timing retard amount if the clutch rotational speed difference becomes less than the retard reduction permitting clutch rotational speed difference, it can prevent the occurrence of such shock to some degree.

Nevertheless, in the automatic transmission apparatus described in the foregoing publication, there is no particular correlation between the timing for returning to the normal control process and the engagement state of the clutch. For this reason, the returning to the normal control process can take place before the clutch rotational speed difference becomes zero, and consequently, the clutch may be engaged after the clutch rotational speed difference that has been reduced once becomes greater again. In that case, a problem arises that such shock as to impair the riding comfort occurs when the clutch is engaged, even though the ignition timing retard control process has been executed. In addition, because there is no particular correlation between the timing for returning to the normal control process and the engagement state of the clutch, the ignition retard can be carried out even after the clutch rotational speed difference has become zero. In that case, a problem arises that the time until returning to the normal control process (hereinafter also referred to as the "recovery time") becomes longer.

It is an object of the present invention to achieve both reduction of the shock at the time of engaging the clutch and shortening of the recovery time from the ignition timing retard control process in the automatic transmission apparatus having an actuator for driving a clutch and performing an ignition timing retard control process at the time of gear shifting.

An automatic transmission apparatus according to the present invention comprises: a clutch having a drive side rotator to which engine torque is transmitted and a driven side rotator capable of contacting with and separating from the drive side rotator; a detecting device configured to detect a clutch relative speed, the clutch relative speed being a difference between a rotational speed of the drive side rotator and a rotational speed of the driven side rotator, and a decrease rate per unit time of the clutch relative speed or of an engine rotational speed; an actuator configured to drive the clutch so as to cause the clutch to disengage and thereafter engage in gear shifting; and a control device configured to control the engine and the actuator. The control device comprises: an ignition timing retard control unit configured to execute an ignition timing retard control process for the engine in gear shifting; a threshold value setting unit configured to set a threshold value of the clutch relative speed based on the decrease rate per unit time; and a return command unit configured to output a command to the ignition timing retard control unit to end the ignition timing retard control process if the clutch relative speed becomes equal to or less than the threshold value before engagement of the clutch is completed.

A time delay occurs between the time when a command for ending the ignition timing retard control process (the command is hereinafter referred to as the "return command") is output and the time when the ignition timing retard control process is actually ended. The time until the clutch relative speed becomes zero (in other words, the time until the completion of engagement of the clutch) can be estimated from the relative speed of the drive side rotator and the driven side rotator and the decrease rate per unit time of the clutch relative speed or of the engine rotational speed. So, the threshold value is set so that the time until the clutch relative speed becomes zero matches the just-mentioned time delay. Then, the return command is output when the clutch relative speed becomes equal to or less than the threshold value in advance of the completion of engagement of the clutch, whereby the ignition timing retard control process can be ended at the time of completing the engagement of the clutch. As a result, both reduction of the shock and shortening of the recovery time can be achieved.

In another embodiment of the invention, the threshold value is set to be greater when the decrease rate per unit time is greater.

With the just-described configuration, the threshold value can be set appropriately according to the decrease rate per unit time. The greater the decrease rate per unit time, the shorter the time until the clutch relative speed becomes zero. Accordingly, by setting the threshold value to be greater when the decrease rate is greater, the return command is output earlier when the decrease rate is greater. As a result, the completion time of the clutch engagement and the ending time for the ignition timing retard control process can be easily matched to each other.

In another embodiment of the invention, the threshold value is set to be smaller when the engine rotational speed is higher.

With the just-described configuration, the threshold value can be set appropriately according to the engine rotational speed. When the engine rotational speed is higher, the time delay becomes less. Therefore, by setting the threshold value to be smaller, the completion time of the clutch engagement and the ending time of the ignition timing retard control process can be easily matched to each other more accurately.

In another embodiment of the invention, the detecting device is configured to detect the clutch relative speed and the decrease rate per unit time of the clutch relative speed. The threshold value is set to be substantially C = V·T, where C is the threshold value, T is an expected time until completing engagement of the clutch, and V is the decrease rate per unit time of the clutch relative speed.

This makes it possible to set the threshold value easily.

In another embodiment of the invention, the expected time until completing engagement of the clutch is set to be less when the engine rotational speed is higher.

This makes it possible to set the expected time appropriately according to the engine rotational speed. When the engine rotational speed is higher, the time delay becomes less. Therefore, by setting the expected time to be less, the completion time of the clutch engagement and the ending time of the ignition timing retard control process can be easily matched to each other more accurately.

In another embodiment of the invention, a straddle-type vehicle equipped with the automatic transmission apparatus with the above-described configuration is provided.

This makes it possible to provide an automatic transmission apparatus that can achieve both reduction of the shock and shortening of the recovery time at the time of the returning from the ignition timing retard control process in gear shifting.

The present invention makes it possible to provide an automatic transmission apparatus having an actuator for driving a clutch that can achieve both reduction of the shock and shortening of the recovery time at the time of returning from the ignition retard control process in gear shifting.

Fig. 1 is a side view of a motorcycle according to a first embodiment.
Fig. 2 is a cross-sectional view illustrating an internal structure of a power unit according to the first embodiment.
Fig. 3 is a block diagram illustrating main elements of the motorcycle according to the first embodiment.
Fig. 4 is a flow chart illustrating the gear shifting control process of an automatic transmission apparatus according to the first embodiment.
Fig. 5 illustrates the relationship between decrease rate per unit time of clutch relative speed and threshold value.
Fig. 6 is a chart showing changes over time of the clutch position, the engine rotational speed, the clutch relative speed, the ignition command timing, and the ignition timing in a control process of the automatic transmission apparatus according to the first embodiment.

Hereinbelow, preferred embodiments of the present invention will be described. It should be noted that the other matters not specifically mentioned in this description but necessary to implement the invention can be understood as design variations by a skilled person based on the prior art in the technical field. The present invention may be implemented based on the content disclosed herein and the common technical knowledge in the field.

### <FIRST EMBODIMENT>

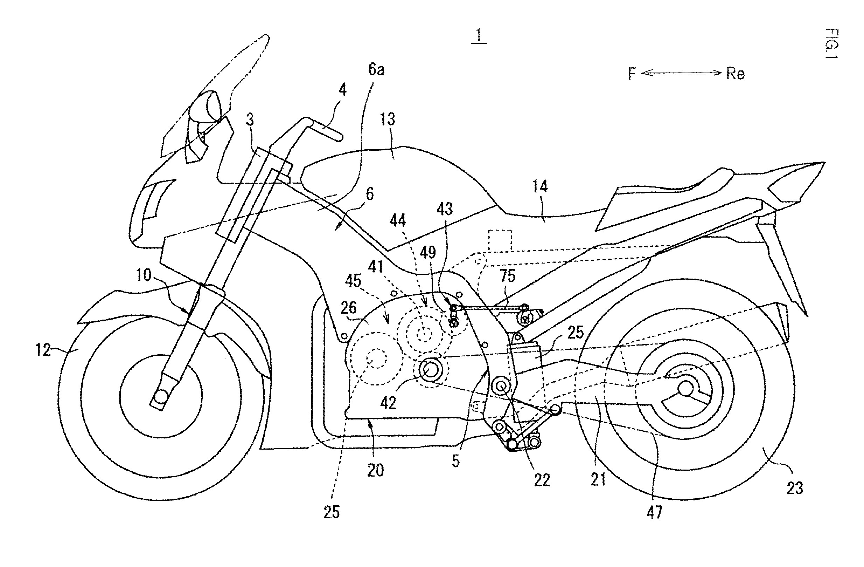

Hereinbelow, a motorcycle equipped with an automatic transmission apparatus according to the present invention will be described with reference to the drawings. Fig. 1 is a side view illustrating a motorcycle 1. In the present description, the terms "front," "rear," "left," and "right" respectively refer to front, rear, left, and right as defined based on the perspective of the rider seated on a later-described seat 14. Reference characters F and Re in the drawings indicate front and rear, respectively.

The motorcycle 1 is one example of the straddle-type vehicle according to the present embodiment. The motorcycle 1 is what is called an on-road type motorcycle. For example, the straddle-type vehicle according to the present invention may be any type of motorcycle including an off-road type motorcycle, a sport bike type motorcycle, a scooter type motorcycle, and a moped type motorcycle. The straddle-type vehicle according to the present invention is not limited to the motorcycle 1. For example, the straddle-type vehicle according to the present invention may be an ATV, a four-wheeled all-terrain vehicle, and the like.

As illustrated in Fig. 1, the motorcycle 1 has a head pipe 3 and a body frame 6. The body frame 6 has a pair of left and right frame unit 6a extending rearward the head pipe 3. In Fig. 1, only frame portion 6a of the frame portions is depicted. A rear portion of the frame portion 6a extends downward. A rear-arm bracket 5 is connected to a rear portion of the frame portion 6a. A front end portion of a rear arm 21 is connected to the rear-arm bracket 5 via a pivot shaft 22. The rear arm 21 is supported vertically swingably by the pivot shaft 22. A rear wheel 23 is supported at a rear end portion of the rear arm 21.

A fuel tank 13 is disposed above the frame portion 6a. A seat 14 for the rider to be seated is disposed at the rear of the fuel tank 13.

A front fork 10 is supported rotatably by the head pipe 3. A handle bar 4 is provided at the upper end of the front fork 10. A front wheel 12 is provided rotatably at a lower end of the front fork 10.

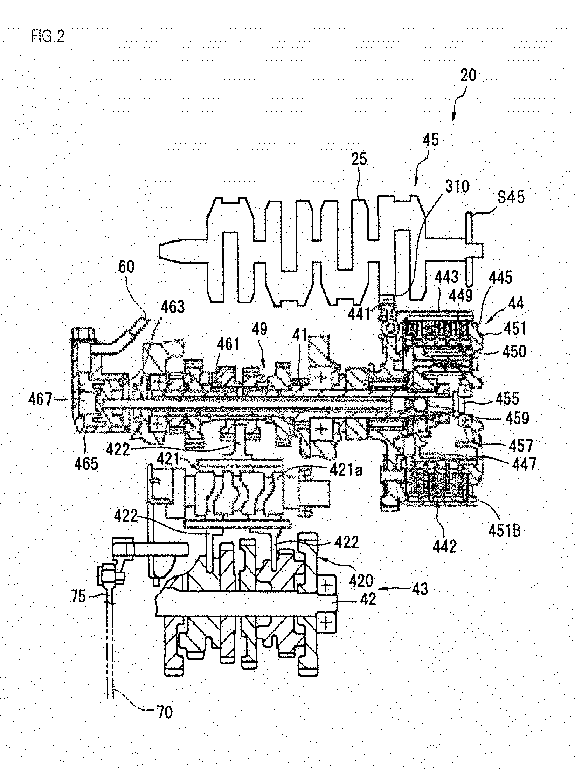

A power unit 20 is mounted on the frame portion 6a and the rear-arm bracket 5 in a suspended manner. Fig. 2 is a cross-sectional view illustrating an internal structure of the power unit 20. As illustrated in Fig. 2, the power unit 20 at least includes an engine 45, a clutch 44, and a transmission mechanism 43. The engine 45, the clutch 44, and the transmission mechanism 43 are assembled integrally to a crankcase 26 (see Fig. 1).

The engine 45 according to the present embodiment is an internal combustion engine that uses gasoline as the fuel. However, the engine 45 may also be one in which a gasoline engine and an electric motor are combined. The engine 45 has a crankshaft 25.

The crankshaft 25 outputs the torque of the engine 45. The power unit 20 has a main shaft 41 and a drive shaft 42. The crankshaft 25 is coupled to a main shaft 41 via the clutch 44. The main shaft 41 is arranged parallel to the crankshaft 25. The main shaft 41 is also arranged parallel to a drive shaft 42.

The clutch 44 in the present embodiment is a multiple friction plate clutch. The clutch 44 has a clutch housing 443 and a clutch boss 447. A plurality of friction plates 445 are provided in the clutch housing 443. A plurality of clutch plates 449 are provided outside the clutch boss 447. The plurality of friction plates 445 rotate together with the clutch housing 443. The plurality of friction plates 445 are displaceable with respect to the axial direction of the main shaft 41. The plurality of friction plates 445 are arrayed along the axial direction of the main shaft 41. The friction plate 445 constitutes the "drive side rotator" in the clutch 44.

Each of the clutch plates 449 faces an adjacent one of the friction plates 445. Each of the clutch plates 449 rotates together with the clutch boss 447. Each of the clutch plates 449 is displaceable with respect to the axial direction of the main shaft 41. The clutch plate 449 constitutes the "driven side rotator" in the clutch 44. In the present embodiment, the plurality of friction plates 445 and the plurality of clutch plates 449 make up a plate assembly 442.

As illustrated in Fig. 2, a pressure plate 451 is disposed vehicle-widthwise outward of the main shaft 41 (i.e., on the right in Fig. 2). The pressure plate 451 is formed in a substantially disc shape. A pressing part 451B projecting toward the plate assembly 442 side is formed in a radially outward portion of the pressure plate 451. The pressing part 45 1 B faces the friction plate 445 that is located on the rightmost side of the plate assembly 442.

The clutch 44 is provided with a spring 450. The spring 450 urges the pressure plate 451 vehicle-widthwise inwardly (i.e., leftward in Fig. 2). In other words, the spring 450 urges the pressure plate 451 in a direction in which the pressing part 451B presses the plate assembly 442.

A center portion of the pressure plate 451 is engaged with one end portion (the right end portion in Fig. 2) of a push rod 455 via a bearing 457. This allows the pressure plate 451 to be rotatable relative to the push rod 455. Note that the main shaft 41 has a tubular shape. The other end portion (the left end portion) of the push rod 455 is accommodated inside the main shaft 41. Inside the main shaft 41, a spherical ball 459 is provided adjacent to the other end portion (the left end portion) of the push rod 455. Further inside the main shaft 41, a push rod 461 is provided adjacently to the ball 459.

A left end portion of the push rod 461 protrudes from the main shaft 41. A piston 463 is provided integrally with the left end portion of the push rod 461. The piston 463 is guided by the cylinder main body 465, and it is slidable in the axial directions of the main shaft 41.

The clutch 44 is driven by a clutch actuator 60. In the present embodiment, the clutch actuator 60 is an electric motor, but the clutch actuator 60 is not limited to the electric motor. The clutch actuator 60 drives the clutch 44 so that the clutch 44 can be engaged and disengaged. When the clutch actuator 60 is actuated, lubrication oil is supplied into a space 467 surrounded by the piston 463 and the cylinder main body 465. When lubrication oil is supplied into the space 467, the piston 463 is pushed and shifted rightward in Fig. 2. Thereby, the piston 463 pushes the pressure plate 451 rightward in Fig. 2, via the push rod 461, the ball 459, the push rod 455, and the bearing 457. When the pressure plate 451 is pushed rightward in Fig. 2, the pressing part 451 B of the pressure plate 451 is separated from the friction plates 445, and the clutch 44 is brought into a disengaged state.

At the time when the clutch 44 is engaged, the pressure plate 451 is moved leftward in Fig. 2 by the spring 450. When the pressure plate 451 moves leftward in Fig. 2, the pressing part 451 B presses the plate assembly 442 leftward. As a result, the friction plates 445 and the clutch plates 449 in the plate assembly 442 are brought into pressure contact with each other. Thereby, the clutch 44 is brought into an engaged state.

On the other hand, in the disengaged state of the clutch 44, the pressure plate 451 is moved rightward in Fig. 2 by the push rod 451. Then, the pressing part 451 B of the pressure plate 451 is separated from the plate assembly 442. In the state in which the pressing part 451 B is separated from the plate assembly 442, the friction plates 445 and the clutch plates 449 are not in pressure contact with each other. A slight clearance is formed between each of the friction plates 445 and each of the clutch plates 449. Therefore, a friction force that can transmit a drive force does not occur between the friction plates 445 and the clutch plates 449.

Thus, the pressure plate 451 moves in one of the axial directions of the main shaft 41 or in the other direction according to the magnitude relationship between the drive force of the clutch actuator 60 and the urging force of the spring 450. According to the just-described movement, the clutch 44 is brought into an engaged state or a disengaged state.

A gear 310 is supported integrally on the crankshaft 25 of the engine 45. A gear 441 that meshes with the gear 310 is supported on the main shaft 41. The gear 441 is rotatable relative to the main shaft 41. The gear 441 is provided integrally with, for example, the clutch housing 443. As a result, the torque of the engine 45 is transmitted from the crankshaft 25 via the gear 441 to the clutch housing 443. Also, the torque of the engine 45 is transmitted the clutch housing 443 to the clutch boss 447 by the friction force produced between the plurality of friction plates 445 and the plurality of clutch plates 449. The clutch boss 447 and the main shaft 41 rotate integrally with each other. This means that there is no relative rotation between the clutch boss 447 and the main shaft 41. Therefore, when the clutch 44 is engaged, the torque of the engine 45 is transmitted to the main shaft 41.

The push rod 455 is not limited to such a push rod that pushes the pressure plate 451 rightward in Fig. 2 by a mechanism inserted in the main shaft 41. The push rod 455 may be such a push rod that pulls the pressure plate 451 rightward in Fig. 2 by a mechanism provided vehicle-widthwise outward (i.e., rightward in Fig. 2) of the pressure plate 451.

The clutch 44 may not be a multiple plate clutch but may be a single plate clutch. The clutch 44 may also be provided with a centrifugal weight. In this case, the clutch 44 is engaged and disengaged by actuation of the clutch actuator 60 and the centrifugal force of the centrifugal weight.

Next, the configuration of the transmission mechanism 43 will be described in detail. The transmission mechanism 43 according to the present embodiment is what is called a dog clutch type transmission mechanism, and a multi-speed type transmission mechanism. The transmission mechanism 43 is disposed on a power transmission path for transmitting the mechanical power of the engine 45 to the rear wheel 23 (see Fig. 1); between the friction plates 445 of the clutch 44 and the rear wheel 23. The transmission mechanism 43 has later-described transmission gears 49 and 420, a shift drum 421, a shift fork 422, a shift actuator 70, and so forth.

A plurality of transmission gears 49 are attached to the main shaft 41. On the other hand, a plurality of transmission gears 420 that correspond to the above-mentioned plurality of transmission gears 49 are attached to the drive shaft 42. Each of the transmission gears 49 and each of the transmission gears 420 have an engaging portion comprising a protrusion protruding in an axial direction of the main shaft 41 or a recess recessed in an axial direction of the main shaft 41. Of the plurality of transmission gears 49 and the plurality of transmission gears 420, only selected one or more of the transmission gears 49 and 420 are engaged with each other. The engaging portions of the transmission gears 49 and the transmission gears 420 overlap with each other with respect to the axial direction of the main shaft 41, whereby the transmission gears 49 and the transmission gears 420 are engaged with each other. At least one of the transmission gears 49 other than the selected one of the transmission gears 49 and the transmission gears 420 other than the selected one of the transmission gears 420 is allowed to be rotatable relative to the main shaft 41 or the drive shaft 42. In other words, at least one of the non-selected transmission gears 49 and the non-selected transmission gears 420 is allowed to spin freely relative to the main shaft 41 or the drive shaft 42. The transmission of rotation between the main shaft 41 and the drive shaft 42 is carried out only through the selected transmission gear 49 and the selected transmission gear 420 that mesh with each other.

The selection of the transmission gear 49 and the transmission gear 420 is performed by the shift drum 421. According to the rotation of the shift drum 421, the combination of the transmission gears 49 and 420 that engage with each other is changed. A plurality of cam grooves 421a are formed in the outer circumferential surface of the shift drum 421. A shift fork 422 is fitted to each of the cam grooves 421a. Each shift fork 422 engages with a predetermined transmission gear 49 of the main shaft 41 and a predetermined transmission gear 420 of the drive shaft 42. In response to rotation of the shift drum 421, each of the plurality of the shift forks 422 is guided by the cam grooves 421a to moves in an axial direction of the main shaft 41. Thereby, of the transmission gears 49 and 420, the gears to be engaged with each other are selected. More specifically, of the plurality of transmission gears 49 and the plurality of transmission gears 420, only the pair of gears that is located at the position corresponding to the rotation angle of the shift drum 421 is brought into a fixed state relative to the main shaft 41 and the drive shaft 42 by a spline. Thereby, the gear position in the transmission mechanism 43 is determined. As a result, the transmission of rotation is carried out between the main shaft 41 and the drive shaft 42 through the transmission gear 49 and the transmission gear 420 at a predetermined transmission gear ratio. The shift drum 421 is rotated only by a predetermined angle by a shift rod 75 moving back and forth.

Switching of the transmission gears of the transmission mechanism 43, in other words, change of the gear position of the transmission mechanism 43, is performed by the shift actuator 70. In the present embodiment, the shift actuator 70 is an electric motor. However, the shift actuator 70 is not limited to the electric motor. The shift actuator 70 is connected to the shift drum 421 via the shift rod 75. The shift actuator 70 changes the combination of the transmission gears 49 and 420 that engage with each other by rotating the shift drum 421. The shift rod 75 is driven by the shift actuator 70 to thereby move back and forth.

With such a configuration as described above, when the engine 45 is operated under the condition in which a predetermined pair of transmission gear 49 and transmission gear 420 are fixed respectively to the main shaft 41 and the drive shaft 42 and the clutch 44 is brought into an engaged state, the torque of the engine 45 is transmitted to the main shaft 41 via the clutch 44. Also, the transmission of rotation is carried out at a predetermined transmission gear ratio between the main shaft 41 and the drive shaft 42 via the predetermined pair of transmission gear 49 and transmission gear 420, so that the drive shaft 42 is rotated. When the drive shaft 42 is rotated, the torque is transmitted by a power transmission mechanism 47 (see Fig. 1) that connects the drive shaft 42 to a rear wheel 23 (see Fig. 1), so that the rear wheel 23 is rotated.

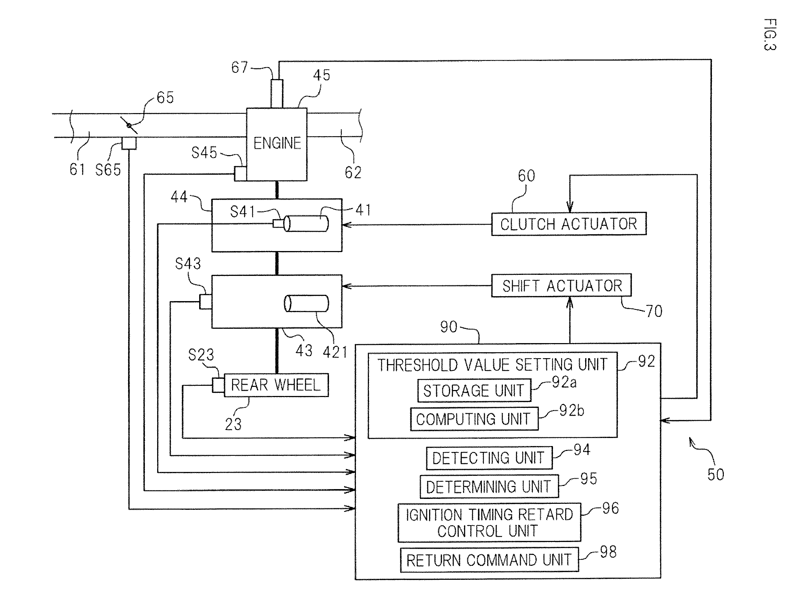

Fig. 3 is a block diagram showing main elements of the motorcycle 1. The motorcycle 1 has the engine 45, the clutch 44, and the transmission mechanism 43. The motorcycle 1 also has an ECU (Electric Control Unit) 90 as a control device. The ECU 90 controls the engine 45 and so forth. An intake pipe 61 and an exhaust pipe 62 are connected to the engine 45. The engine 45 is provided with an ignition device 67. A throttle valve 65 is disposed in the intake pipe 61. The throttle valve 65 adjusts the amount and speed of the air flowing through the intake pipe 61.

Next, an automatic transmission apparatus 50 according to the present embodiment will be described below. The automatic transmission apparatus 50 has the clutch 44, the clutch actuator 60, and the ignition device 67. The automatic transmission apparatus 50 also has the ECU 90 as the control device for controlling the clutch actuator 60 and the ignition device 67.

The automatic transmission apparatus 50 has an engine rotational speed sensor S45, the main shaft rotational speed sensor S41, a vehicle speed sensor S23, a throttle opening sensor S65, and a gear shift position sensor S43. The engine rotational speed sensor S45 detects the rotational speed of the engine 45 (more specifically, the rotational speed of the crankshaft 25 of the engine 45). The main shaft rotational speed sensor S41 is provided for the main shaft 41 of the clutch 44 to detect the rotational speed of the main shaft 41. The vehicle speed sensor S23 detects the vehicle speed of the motorcycle 1. In the present embodiment, the vehicle speed sensor S23 is configured to detect the rotational speed of the rear wheel 23. The vehicle speed is detected based on the rotational speed of the rear wheel 23. However, the method of detecting the vehicle speed is not particularly limited. The throttle opening sensor S65 detects the opening of the throttle valve 65. The gear shift position sensor S43 detects the gear position of the transmission mechanism 43. The number of gear positions is not particularly limited. For example, the gear positions may include neutral, first gear, second gear, third gear, fourth gear, fifth gear, and sixth gear.

The engine rotational speed sensor S45, the main shaft rotational speed sensor S41, the vehicle speed sensor S23, the gear shift position sensor S43, and the throttle opening sensor S65 are each connected to the ECU 90. The ECU 90 receives signals from the engine rotational speed sensor S45, the main shaft rotational speed sensor S41, the vehicle speed sensor S23, the throttle opening sensor S65, and the gear shift position sensor S43. The ignition device 67, the clutch actuator 60, and the shift actuator 70 are each connected to the ECU 90. The ECU 90 outputs control signals to the ignition device 67, the clutch actuator 60, and the shift actuator 70.

As illustrated in Fig. 3, the ECU 90 comprises: a threshold value setting unit 92 for setting a threshold value of a relative speed that is the difference between the rotational speed of the friction plates 445 and the rotational speed of the clutch plates 449 of the clutch 44 (the relative speed is hereinafter also referred to as the "clutch relative speed"), which will be detailed later; a detecting unit 94 for detecting a decrease rate per unit time of the clutch relative speed; a determining unit 95 for determining whether or not the clutch relative speed is equal to or less than the just-mentioned threshold value; an ignition timing retard control unit 96 for executing an ignition timing retard control process for the engine 45 after starting disengagement of the clutch 44; and a return command unit 98 for outputting a command for ending the ignition timing retard control process (the command is hereinafter also referred to as "return command"). The threshold value setting unit 92 has a storage unit 92a for storing information about the threshold value and a computing unit 92b for computing the threshold value based on the information about the threshold value.

The automatic transmission apparatus 50 performs a series of the following operations: causing the clutch 44 to disengage, changing the gear position of the transmission mechanism 43, and causing the clutch 44 to engage. When the clutch 44 is disengaged, a rotational speed difference arises between the rotational speed of the drive side rotator of the clutch 44 and the rotational speed of the driven side rotator of the clutch 44. In other words, when the clutch 44 is disengaged, a rotational speed difference arises between the rotational speed of the friction plates 445 and the rotational speed of the clutch plates 449. Particularly in the case where the clutch is disengaged when the accelerator (not shown) is open (i.e., when the opening of the throttle valve 65 is relatively large), the rotational speed difference becomes great because the load on the clutch plates 449 is lost. As a consequence, revving-up of the engine 45 tends to occur easily. The automatic transmission apparatus 50 executes the ignition timing retard control process after starting to disengage the clutch 44, in order to inhibit the revving-up of the engine 45.

If the ignition timing retard control process is ended in the middle of engaging the clutch 44, that is, before the rotational speed difference of the clutch 44 becomes substantially zero, revving-up of the engine 45 occurs before completing the engagement of the clutch 44. As a consequence, shock such as to impair the riding comfort may occur at the time of completing the engagement of the clutch 44. On the other hand, if the ignition timing retard control process is continued even after completing the engagement of the clutch 44, that the time until returning to the normal control process (hereinafter also referred to as the "recovery time") becomes longer. If the torque of the engine 45 decreases excessively at that time, shock such as to impair the riding comfort may occur. For this reason, the automatic transmission apparatus 50 according to the present embodiment executes a control process as described below.

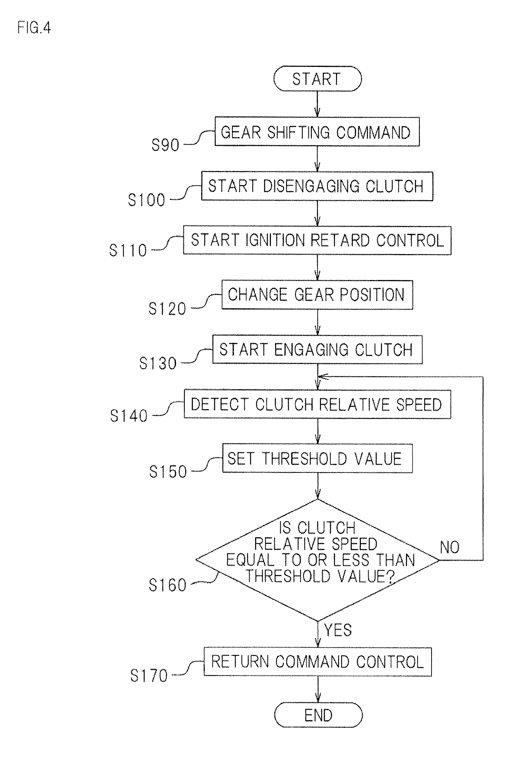

Next, the gear shifting control process of the automatic transmission apparatus 50 according to the present embodiment will be described with reference to the flow-chart of Fig. 4. Fig. 4 is a flowchart illustrating the gear shifting control process. First, at step S90, the ECU 90 outputs a gear shifting command according to the driving condition of the motorcycle 1. The driving condition of the motorcycle 1 and the method of detecting the driving condition are not particularly limited. For example, the ECU 90 may output a gear shifting command based on the vehicle speed detected by the vehicle speed sensor S23, the rotational speed of the engine 45 detected by the engine rotational speed sensor S45, and/or the gear position of the transmission mechanism 43 detected by the gear shift position sensor S43.

At step S100, which is after starting the gear shifting control process, the ECU 90 starts to disengage the clutch 44. The ECU 90 starts to disengage the clutch 44 by driving the clutch actuator 60. At step S 110, which is after starting to disengage the clutch 44, the ignition timing retard control unit 96 of the ECU 90 starts the ignition timing retard control process in order to reduce the torque of the engine 45. The ignition timing retard control unit 96 of the ECU 90 sends an ignition command signal to the ignition device 67 so as to retard the ignition timing. Note that the ignition timing retard control process at step S110 may be started at the same time as the start of disengagement of the clutch 44 at step S 100. The ignition timing retard control process at step S110 may be started after the start of disengagement of the clutch 44 at step S100. The ignition timing retard control process at step S110 may be started before the start of disengagement of the clutch 44 at step S100 and at the same time as or after issuing the gear shifting command at step S90. The ignition timing retard control process is started at the same time as or after issuing the gear shifting command by the ECU 90 in gear shifting.

At step S120, the ECU 90 changes the gear position of the transmission mechanism 43. For example, the ECU 90 changes the gear position from the second gear to the third gear. More specifically, the ECU 90 rotates the shift drum 421 by driving the shift actuator 70. In association with the rotation of the shift drum 421, the shift fork 422 moves. According to the movement of the shift fork 422, the transmission gear moves, whereby the gear position is changed. The changing of the gear position at step S120 may be performed after completing disengagement of the clutch 44. The changing of the gear position at step S120 may be performed during the time from the start the start of disengagement of the clutch 44 to the completion of disengagement thereof. The changing of the gear position at step S120 may be started at the same time as the start of the ignition timing retard control process at step S110. The changing of the gear position at step S120 may be started before step S110.

After changing the gear position of the transmission mechanism 43, the ECU 90 starts to engage the clutch 44 at step S 130. The ECU 90 first controls the clutch actuator 60 so as to cause the clutch 44 to move from the disengaged state to a half clutch state. It should be noted that the half clutch state refers to a state in which the friction plates 445 and the clutch plates 449 are rotating together while slipping against each other. In other words, the half clutch state refers to a state in which the friction plates 445 and the clutch plates 449 are in relative rotation to each other while making contact with each other. Therefore, in the half clutch state, the torque of the engine 45 is transmitted to the friction plates 445 and the clutch plates 449 via the crankshaft 25. When the clutch 44 is disengaged, the drive force of the crankshaft 25 is transmitted to the friction plates 445, whereas the drive force is not transmitted to the clutch plates 449. As a result, the clutch relative speed becomes greater. However, as the clutch 44 is gradually engaged, the drive force of the crankshaft 25 is transmitted to the clutch plates 449 via the friction plates 445. As a result, the clutch relative speed gradually becomes smaller.

As described previously, in order to reduce the shock that impairs the riding comfort and to prevent the delay in the recovery time, the ECU 90 controls the ignition device 67 so that the ignition timing retard control process ends substantially at the same time as the completion of engagement of the clutch 44. Note that a time delay occurs from when the ECU 90 has sent a signal to the ignition device 67 so as to end the ignition timing retard control process (more specifically, from when the ECU 90 changes the signal to be sent to the ignition device 67 from the signal for the ignition timing retarding to the signal for the normal control process) to when the ignition timing retard control process actually ends. So, the ECU 90 sends a signal for ending the ignition retard to the ignition device 67 in advance of the completion of engagement of the clutch 44. For this purpose, the ECU 90 determines whether or not to end the ignition timing retard control process when the clutch 44 is in the half clutch state. In other words, the ECU 90 determines whether or not to execute an ignition timing retard return control process when the clutch 44 is in the half clutch state. First, at step S 140, the detecting unit 94 of the ECU 90 detects the clutch relative speed, which is the difference between the rotational speed of the friction plates 445 and the rotational speed of the clutch plates 449. Then, from the detected clutch relative speed, the detecting unit 94 of the ECU 90 detects the decrease rate per unit time of the clutch relative speed. More specifically, the detecting unit 94 of the ECU 90 indirectly detects the rotational speed of the friction plates 445 and the rotational speed of the clutch plates 449 respectively from the engine rotational speed sensor S45 and the main shaft rotational speed sensor S41. Then, from the detected rotational speed of the engine 45 and the detected rotational speed of the main shaft 41, the detecting unit 94 of the ECU 90 detects the clutch relative speed. Then, from the detected clutch relative speed, the detecting unit 94 of the ECU 90 detects the decrease rate per unit time of the clutch relative speed.

In the present embodiment, the rotational speed of the friction plates 445 and the rotational speed of the clutch plates 449 are indirectly detected. However, the method of detecting the rotational speed of the friction plates 445 and the rotational speed of the clutch plates 449 is not particularly limited. The sensors used for the detection are not limited to the engine rotational speed sensor S45 and the main shaft rotational speed sensor S41. The rotational speed of the friction plates 445 and the rotational speed of the clutch plates 449 may be detected directly. The detecting unit 94 of the ECU 90 may indirectly detect the rotational speed of the friction plates 445 and the rotational speed of the clutch plates 449 using other types of sensors.

Whether or not to end the ignition timing retard control process is decided by whether or not the clutch relative speed has become equal to or less than the threshold value. Next, at step S 150, the threshold value setting unit 92 of the ECU 90 sets a threshold value. The threshold value is set appropriately so that the end of the ignition timing retard control process and the completion of engagement of the clutch 44 will be substantially at the same time. Note that, in the half-clutch control process in which the clutch 44 is gradually engaged, the decrease rate per unit time of the clutch relative speed (hereinafter also simply referred to as the "decrease rate of the clutch relative speed") can be regarded as being substantially constant. Therefore, the time until the completion of engagement of the clutch 44 can be estimated based on the clutch relative speed and the decrease rate of the clutch relative speed. The time delay from when the ECU 90 sends a signal to the ignition device 67 so as to end the ignition timing retard control process to when the ignition retard actually ends (hereinafter referred to as simply the "time delay") can be specified by a test, simulation, or the like in advance. The just-mentioned time delay can be estimated based on the driving condition of the motorcycle 1. In the present embodiment, the ECU 90 outputs the return command when the expected time until the completion of engagement of the clutch 44 substantially matches the time delay during the half-clutch control process. For that purpose, the threshold value setting unit 92 of the ECU 90 sets the threshold value of the clutch relative speed based on the decrease rate of the clutch relative speed and the time delay.

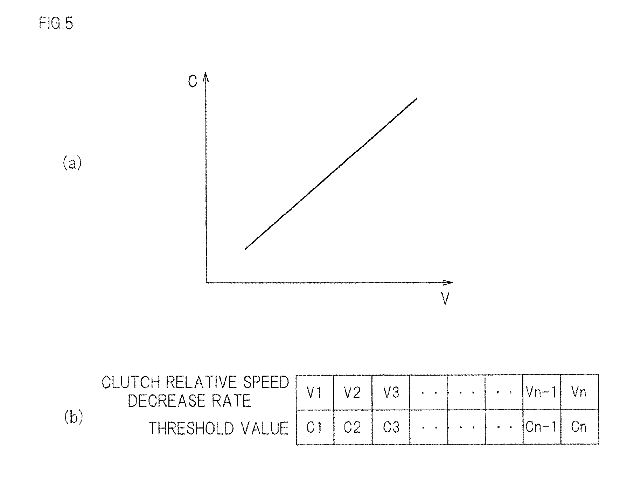

Fig. 5 illustrates the relationship between the decrease rate of the clutch relative speed and the threshold value in the present embodiment. As illustrated in Fig. 5(a), in the ECU 90, a function formula for calculating a threshold value C is prepared in advance. This function formula is represented as C = V·T, where C is the threshold value, V is the decrease rate of the clutch relative speed, and T is the expected time until the completion of engagement of the clutch 44. The expected time T may be either a constant or a variable. When the expected time T is a variable, the expected time T may be such a variable that is changed as appropriate according to the rotational speed of the engine 45. In this case, the expected time T is set to be smaller as the rotational speed of the engine 45 is greater. The computing unit 92b of the threshold value setting unit 92 of the ECU 90 computes the threshold value C by substituting the clutch relative speed decrease rate V detected in step S140 into the function formula. The method of computing the threshold value is not limited to the above-described method based on the function formula. The method of computing the threshold value may be other methods based on the decrease rate per unit time of the clutch relative speed. For example, as illustrated in Fig. 5(b), in the ECU 90, threshold values C corresponding to decrease rates V of the clutch relative speed are set in a map in advance. The computing unit 92b of the ECU 90 may set the threshold value C by matching the clutch relative speed decrease rate V with the map. In the above-described map, for example, when the clutch relative speed decrease rate detected in step S140 is V2, the threshold value is set to be C2 from the map of Fig. 5(b). The function formula, the map, or the like is stored in the storage unit 92a of the threshold value setting unit 92 of the ECU 90. The function formula, the map, or the like may be described in a computer program to be executed by the ECU 90 or stored in a memory or the like provided in the ECU 90.

At step S160, the determining unit 95 of the ECU 90 determines whether or not the clutch relative speed detected at step S 140 is equal to or less than the threshold value set at step S 150. Then, if the ECU 90 determines that the clutch relative speed is equal to or less than the threshold value, the process proceeds to step S 170. On the other hand, if the ECU 90 determines that the clutch relative speed is not equal to or less than the threshold value, the process returns to step S 140.

At step S170, the return command unit 98 of the ECU 90 outputs a return command to the ignition device 67. The return command means that the signal to be sent to the ignition device 67 is changed from the signal for the ignition timing retarding to the signal for the normal control process. Then, upon receiving the return command, the ignition device 67 ends the ignition timing retard control process. At this time, a time delay occurs until the ignition timing retard control process actually ends. However, this time delay is substantially the same as the time until the engagement of the clutch 44 is completed. Accordingly, the ignition timing retard control process ends at the same time as the engagement of the clutch 44 is completed, and therefore, such shock as to impair the riding comfort at the time of completing the engagement of the clutch 44 can be prevented. In addition, the recovery time until returning from the ignition timing retard control process to the normal control process is inhibited from becoming longer, so the gear shifting time is prevented from becoming longer.

The ECU 90 functions as the ignition timing retard control unit 96 when executing the process of step S110. The ECU 90 functions as the detecting unit 94 when executing the process of step S 140. The ECU 90 functions as the threshold value setting unit 92 when executing the process of step S150. The ECU 90 functions as the determining unit 95 when executing the process of step S160. The ECU 90 functions as the return command unit 98 when executing the process of step S 170. Thus, the ECU 90 has the threshold value setting unit 92, the detecting unit 94, the determining unit 95, the ignition timing retard control unit 96, and the return command unit 98. The threshold value setting unit 92 has the storage unit 92a for storing information about the threshold value of step S150 and the computing unit 92b for computing the threshold value based on the information about the threshold value of step S150. In the present embodiment, the detecting device for detecting the clutch relative speed and the decrease rate per unit time of the clutch relative speed is constituted by the engine rotational speed sensor S45, the main shaft rotational speed sensor S41, and the detecting unit 94.

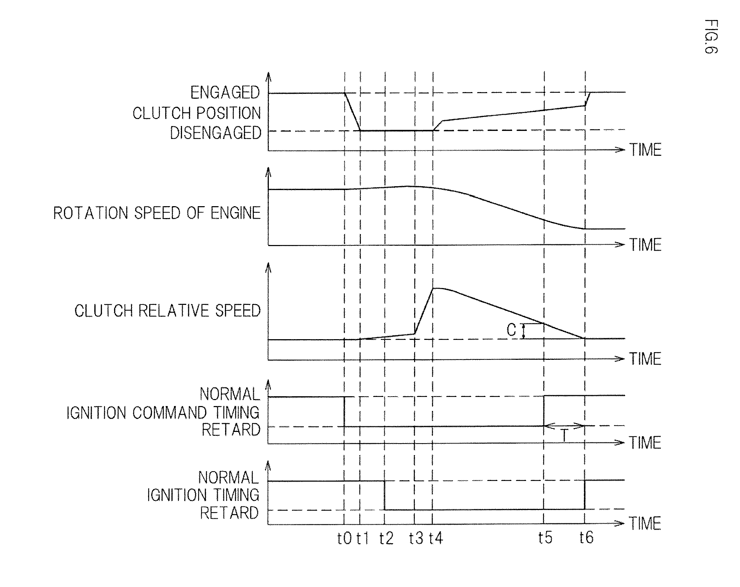

Next, with reference to Fig. 6, one example of the gear shifting control process of the automatic transmission apparatus 50 will be described in detail. Fig. 6 is a chart showing changes over time of the clutch position, the engine rotational speed, the clutch relative speed, the ignition command timing, and the ignition timing in the gear shifting control process. Note that the ignition command timing refers to the timing at which the ECU 90 sends the ignition command signal to the ignition device 67. The ignition timing is the timing at which ignition of the ignition device 67 is actually performed.

The ECU 90 outputs the gear shifting command at time t0 (see step S90 in Fig. 4.) After outputting the gear shifting command, the ECU 90 starts to disengage the clutch 44 by driving the clutch actuator 60 and thereby starts the gear shifting control process (see step S100). Then, at the same time as starting the gear shifting control process (time t0), the ECU 90 sends a command for ignition retarding to the ignition device 67 in order to execute the ignition timing retard control process (see step S110). At time t1, the disengagement of the clutch 44 is completed. Just after the completion of disengagement the clutch 44, there is no difference between the rotational speed of the friction plates 445 and the rotational speed of the clutch plates 449 of the clutch 44. However, since the drive force is not transmitted to the clutch plates 449, the clutch relative speed gradually becomes higher. At time t2, upon receiving the command for ignition retarding, the ignition device 67 starts the ignition timing retard control process. A time delay of time t0 to time t2 occurs from the time when the command for ignition retarding is sent to the time when the ignition timing retard control process is actually started. The reason why there is such a difference between time t0, at which the ECU 90 sends an ignition retard command, and time t2, at which the ignition device 67 actually starts the ignition timing retard control process, is that it takes some time from when the ignition retard command is sent until the ignition timing retard control process is started. Note that in the present embodiment, the ignition timing retard control process is stated after the completion of disengagement of the clutch 44. However, it is possible that the ignition timing retard control process may be started in the middle of disengagement of the clutch 44 or before the start of disengagement of the clutch 44.

Then, although not shown in Fig. 6, the ECU 90 changes the gear position of the transmission mechanism 43 by driving the shift actuator 70. More specifically, the ECU 90 drives the shift actuator 70 either during the time from time t0, at which the disengagement of the clutch 44 is started, until time t1, at which the disengagement of the clutch 44 is completed, or at the same time as or immediately after time t1, so that the shift drum 421 rotates. In response to rotation of the shift drum 421, the shift fork 422 moves and the transmission gear also moves, whereby the gear position is changed (see step S120). Here, time t4 is the time at which the changing of the gear position is completed.

When the changing of the gear position is completed at time t4, and the half-clutch control process for the clutch 44 is started. That is, the control process of gradually engaging the clutch 44 that has been disengaged is started (see step S 130). The clutch relative speed abruptly increases from time t3 because of the change of the gear position. However, the engine rotational speed gradually decreases by the ignition timing retard control process, and in addition, the friction plates 445 and the clutch plates 449 of the clutch 44 start to come into contact with each other by the half-clutch control process, so the clutch relative speed gradually decreases after time t4. After time t4, the detecting unit 94 detects the clutch relative speed and the decrease rate per unit time of the clutch relative speed (see step S 140). Based on the result of the detection, the threshold value setting unit 92 sets a threshold value (see step S150). Then, the determining unit 95 compares the clutch relative speed with the threshold value (see step S160) and determines whether or not the clutch relative speed is equal to or less than the threshold value. At time t5, if the clutch relative speed is equal to or less than the threshold value C, the return command unit 98 sends a return command to the ignition device 67 (see step S170). A time delay T occurs between the time when the return command unit 98 of the ECU 90 sends out the return command and the time when the ignition timing retard control process actually ends. As a result, the ignition timing retard control process ends at time t6, at which time delay T has elapsed from time t5. At time t6, the engagement of the clutch 44 is also completed. It is desirable that at time t6, both the ignition timing retard control process and the engagement of the clutch 44 be completed at the same time. Nevertheless, it is possible that there may be a slight time gap between the end of the ignition timing retard control process and the completion of engagement of the clutch 44. It is sufficient that the end of the ignition timing retard control process and the completion of engagement of the clutch 44 take place substantially at the same time.

The changing of the gear position according to the present embodiment is such that the gear position becomes higher. In other words, it is upshifting. However, the above-described control process may be applied not just to the gear shifting control process for upshifting but also to such changing that the gear position becomes lower, that is, the gear shifting control process for downshifting.

As described above, according to the present embodiment, the return command can be output prior to the completion of engagement of the clutch 44 so that the ignition timing retard control process ends substantially at the same time as the completion of engagement of the clutch 44. Thereby, the end timing of the ignition timing retard control process and the completion timing of engagement of the clutch 44 can be matched to each other. As a result, shock such as to impair the riding comfort can be prevented from occurring at the time of completing the engagement of the clutch 44. Moreover, it is possible to avoid continuing the ignition timing retard control process even after the engagement of the clutch 44 is completed. Therefore, the recovery time from the ignition timing retard control process can be prevented from getting longer. As a result, both reduction of the shock and shortening of the recovery time can be achieved.

According to the present embodiment, the threshold value is set to be greater as the decrease rate per unit time of the clutch relative speed is greater. The greater the decrease rate per unit time of the clutch relative speed, the shorter the time until the clutch relative speed becomes zero. In other words, the time until the engagement of the clutch 44 is completed becomes shorter. Accordingly, by setting the threshold value to be greater as the decrease rate is greater, the return command is output earlier when the decrease rate is greater. As a result, the completion time of the engagement of the clutch 44 and the ending time for the ignition timing retard control process can be easily matched to each other. By setting the threshold value appropriately in this way, both reduction of the shock and shortening of the recovery time can be achieved more suitably.

In the present embodiment, the threshold value C is set to be substantially C = V·T, where T is the expected time until the completion of engagement of the clutch 44 and V is the decrease rate per unit time of the clutch relative speed. This makes it possible to set the threshold value easily.

It is desirable that when the expected time T until the completion of engagement of the clutch 44 is a variable, the expected time T be set to be smaller as the rotational speed of the engine is greater. This makes it possible to set the expected time T appropriately according to the engine rotational speed. When the engine rotational speed is higher, the time delay becomes less. Therefore, by setting the expected time T to be less, the completion time of engagement of the clutch 44 and the ending time of the ignition timing retard control process can be easily matched to each other more accurately.

In the present embodiment, it is possible to provide a motor cycle 1 provided with the automatic transmission apparatus 50 that can achieve both reduction of the shock and shortening of the recovery time at the time of the returning from the ignition timing retard control process in gear shifting. Since the motorcycle 1 is light in weight, the rider can easily feel shock even if the shock is small. For this reason, when the motorcycle 1 is equipped with the automatic transmission apparatus 50 as described above, it is possible to offer better riding comfort to the rider more effectively.

Hereinabove the first embodiment has been described. It should be noted, however, that the automatic transmission apparatus according to the present invention is not limited to the automatic transmission apparatus 50 of the present embodiment, but may be embodied in various other types of embodiments. Next, another embodiment will be described briefly.

### <SECOND EMBODIMENT>

In the first embodiment, the ECU 90 detects a decrease rate per unit time of the clutch relative speed and sets a threshold value according to the decrease rate per unit time of the clutch relative speed. The ECU 90 sends a return command for ending the ignition timing retard control process of the ignition device 67 to the ignition device 67 if the clutch relative speed becomes equal to or less than the threshold value before the completion of engagement of the clutch 44. However, the ECU 90 is not limited to having the above-described configuration. It is also possible to employ an ECU 90 according to a second embodiment, as shown in the following.

Next, the second embodiment will be described. In the present embodiment, the same parts as in the first embodiment are designated by the same reference numerals and will not be further elaborated upon. The ECU 90 according to the present embodiment detects a decrease rate per unit time of the rotational speed of the engine 45 (hereinafter also referred to simply as the "engine rotational speed") using the detecting unit 94. More specifically, the ECU 90 detects the rotational speed of the engine 45 from the engine rotational speed sensor S45. The ECU 90 detects the decrease rate per unit time from the detected engine rotational speed. Then, based on the decrease rate per unit time of the engine rotational speed, the ECU 90 sets a threshold value of the clutch relative speed. In the present embodiment, the detecting device for detecting the decrease rate per unit time of the engine rotational speed is constituted by the engine rotational speed sensor S45 and the detecting unit 94.

The threshold value of the clutch relative speed in the present embodiment is set to be smaller as the engine rotational speed is higher. More specifically, the higher the engine rotational speed, the shorter the time from when the ECU 90 sends the return command to the ignition device 67 to when the ignition timing retard control process ends (i.e., the expected time until the completion of engagement of the clutch 44). For this reason, the threshold value is set to be smaller as the engine rotational speed is greater. In the present embodiment, it is possible to calculate the threshold value C using a function formula as well as in the first embodiment. This function formula is represented as C = V·T, where C is the threshold value, V is the decrease rate of the engine rotational speed, and T is the expected time until the completion of engagement of the clutch 44. The expected time T may be either a constant or a variable. The method of computing the threshold value is not limited to the above-described method based on the function formula. The method of computing the threshold value may be other methods in which the threshold value is determined based on the decrease rate per unit time of the engine revolution speed.

In the present embodiment, the threshold value can be changed as appropriate according to the engine rotational speed. The same advantageous effects can be obtained by setting the threshold value to be smaller as the engine rotational speed is higher. By outputting the return command for the ignition timing retard control process prior to completing the engagement of the clutch, the ignition timing retard control process can be ended substantially at the time of completing the engagement of the clutch. As a result, both reduction of the shock and shortening of the recovery time can be achieved more suitably.

### < OTHER EMBODIMENTS >

In the foregoing embodiments, the gear shifting control process is automatically started by detecting the condition of the motorcycle 1 by the ECU 90. However, it is also possible, for example, to provide the motorcycle 1 with a switch for changing the gear position of the transmission mechanism 43 and to start the gear shifting control process by manually operating the switch by the rider.

In the foregoing embodiments, the clutch actuator 60 and the shift actuator 70 are provided separately. However, instead of providing the clutch actuator 60 and the shift actuator 70 separately, it is also possible to a single actuator for driving both the clutch 44 and the transmission mechanism 43.

### REFERENCE SIGNS LIST

1 -- Motorcycle (straddle-type vehicle)
44 -- Clutch
50 -- Automatic transmission apparatus
67 -- Ignition device
90 -- ECU (control device)
92 -- Threshold value setting unit
94 -- Detecting unit
95 -- Determining unit
96 -- Ignition timing retard control unit
98 -- Return command unit
445 -- Friction plate (drive side rotator)
449 -- Clutch plate (driven side rotator)

## Claims

1. An automatic transmission apparatus comprising:
a clutch having a drive side rotator to which engine torque is transmitted and a driven side rotator capable of contacting with and separating from the drive side rotator;
a detecting device configured to detect a clutch relative speed, the clutch relative speed being a difference between a rotational speed of the drive side rotator and a rotational speed of the driven side rotator, and a decrease rate per unit time of the clutch relative speed or of an engine rotational speed;
an actuator configured to drive the clutch so as to cause the clutch to disengage and thereafter engage in gear shifting; and
a control device configured to control the engine and the actuator,
the control device comprising:
an ignition timing retard control unit configured to execute an ignition timing retard control process for the engine in gear shifting;
a threshold value setting unit configured to set a threshold value of the clutch relative speed based on the decrease rate per unit time; and
a return command unit configured to output a command to the ignition timing retard control unit to end the ignition timing retard control process if the clutch relative speed becomes equal to or less than the threshold value before engagement of the clutch is completed.

2. The automatic transmission apparatus according to claim 1, wherein the threshold value is set to be greater when the decrease rate per unit time is greater.

3. The automatic transmission apparatus according to claim 1, wherein the threshold value is set to be smaller when the engine rotational speed is higher.

4. The automatic transmission apparatus according to any one of claims 1 to 3, wherein:
the detecting device is configured to detect the clutch relative speed and the decrease rate per unit time of the clutch relative speed; and
the threshold value is set to be substantially C = V·T, where C is the threshold value, T is an expected time until completing engagement of the clutch, and V is the decrease rate per unit time of the clutch relative speed.

5. The automatic transmission apparatus according to claim 4, wherein the expected time until completing engagement of the clutch is set to be less when the engine rotational speed is higher.

6. A straddle-type vehicle comprising an automatic transmission apparatus according to any one of claims 1 to 5.

## Patentansprüche

1. Automatikgetriebevorrichtung, umfassend:
eine Kupplung, die einen antriebsseitigen Rotator, auf den das Maschinenendrehmoment übertragen wird, und einen Rotator der angetriebenen Seite hat, der in der Lage ist, den antriebsseitigen Rotator zu berühren und sich von diesem zu trennen;
eine Erfassungsvorrichtung, die dazu eingerichtet ist, eine Kupplungsrelativdrehzahl, wobei die Kupplungsrelativdrehzahl eine Differenz zwischen einer Drehzahl des antriebsseitigen Rotators und einer Drehzahl des Rotators der angetriebenen Seite ist, und eine Abnahmerate per Zeiteinheit der Kupplungsrelativdrehzahl oder einer Maschinendrehzahl zu erfassen;
ein Stellglied, das dazu eingerichtet ist, die Kupplung derart anzutreiben, dass bewirkt wird, dass sich die Kupplung löst und anschließend beim Schalten des Ganges in Eingriff gelangt; und
eine Steuervorrichtung, die dazu eingerichtet ist, die Maschine und das Stellglied zu steuern,
wobei die Steuervorrichtung umfasst:
eine Zündzeitpunkt-Verzögerungssteuereinheit, die dazu eingerichtet ist, einen Zündzeitpunkt-Verzögerungssteuervorgang für die Maschine beim Schalten eines Ganges auszuführen;
eine Schwellenwert-Einstelleinheit, die dazu eingerichtet ist, einen Schwellenwert der Kupplungsrelativdrehzahl auf der Basis der Abnahmerate per Zeiteinheit zu setzen; und
eine Rückkehrbefehlseinheit, die dazu eingerichtet ist, einen Befehl zu der Zündzeitpunkt-Verzögerungssteuereinheit auszugeben, den Zündzeitpunkt-Verzögerungssteuervorgang zu beenden, sofern die Kupplungsrelativdrehzahl kleiner oder gleich dem Schwellenwert wird, bevor der Eingriff der Kupplung abgeschlossen ist.

2. Automatikgetriebevorrichtung nach Anspruch 1, bei der der Schwellenwert größer eingestellt wird, wenn die Abnahmerate per Zeiteinheit größer ist.

3. Automatikgetriebevorrichtung nach Anspruch 1, bei der der Schwellenwert kleiner eingestellt wird, wenn die Maschinendrehzahl höher ist.

4. Automatikgetriebevorrichtung nach einem der Ansprüche 1 bis 3, bei der:
die Erfassungsvorrichtung dazu eingerichtet ist, die Kupplungsrelativdrehzahl und die Abnahmerate per Zeiteinheit der Kupplungsrelativdrehzahl zu erfassen; und
der Schwellenwert im wesentlichen auf C = V · T eingestellt wird, wobei C der Schwellenwert, T eine erwartete Zeit bis zum Abschluss des Eingreifens der Kupplung ist und V die Abnahmerate per Zeiteinheit der Kupplungsrelativdrehzahl ist.

5. Automatikgetriebevorrichtung nach Anspruch 4, bei der die erwartete Zeit bis zum Abschluss des Eingreifens der Kupplung geringer eingestellt wird, wenn die Maschinendrehzahl höher ist.

6. Sattelfahrzeug, umfassend eine Automatikgetriebevorrichtung nach einem der Ansprüche 1 bis 5.

## Revendications

1. Appareil de transmission automatique comprenant :
- un embrayage comportant un dispositif de rotation côté entrainement auquel un couple d'un moteur est transmis et un dispositif de rotation côté entrainé susceptible de venir au contact et de se séparer du dispositif de rotation côté entrainement ;
- un dispositif de détection configuré pour détecter une vitesse relative d'embrayage, la vitesse relative d'embrayage étant une différence entre une vitesse de rotation du dispositif de rotation côté entrainement et une vitesse de rotation du dispositif de rotation côté entrainé, et un taux de décroissance par unité de temps de la vitesse relative d'embrayage ou d'une vitesse de rotation d'un moteur ;
- un actionneur configuré pour commander l'embrayage de façon à faire en sorte que l'embrayage se désengage puis s'engage lors d'un changement de rapport ; et
- un dispositif de commande configuré pour commander le moteur et l'actionneur,
- le dispositif de commande comprenant :
- une unité de commande de retard de chronologie d'allumage configurée pour exécuter un processus de commande de retard de chronologie d'allumage pour le moteur lors d'un changement de rapport ;
- une unité de fixation de valeur de seuil configurée pour fixer une valeur de seuil de la vitesse relative d'embrayage fondée sur le taux de décroissance par unité de temps ; et
- une unité d'instruction de retour configurée pour délivrer en sortie une instruction à l'unité de commande de retard de chronologie d'allumage pour mettre fin au processus de commande de retard de chronologie d'allumage si la vitesse relative d'embrayage devient inférieure ou égale à la valeur de seuil avant que l'engagement de l'embrayage soit achevé.

2. Appareil de transmission automatique selon la revendication 1, dans lequel la valeur de seuil est fixée pour être plus importante lorsque le taux de décroissance par unité de temps est plus important.

3. Appareil de transmission automatique selon la revendication 1, dans lequel la valeur de seuil est fixée pour être moins importante lorsque la vitesse de rotation du moteur est plus importante.

4. Appareil de transmission automatique selon l'une quelconque des revendications 1 à 3, dans lequel :
- le dispositif de détection est configuré pour détecter la vitesse relative d'embrayage et le taux de décroissance par unité de temps de la vitesse relative d'embrayage ; et
- la valeur de seuil est fixée pour être sensiblement de C = V . T, C étant la valeur de seuil, T étant un temps estimé jusqu'à l'achèvement de l'engagement de l'embrayage et V étant le taux de décroissance par unité de temps de la vitesse relative d'embrayage.

5. Appareil de transmission automatique selon la revendication 4, dans lequel le temps estimé jusqu'à l'achèvement de l'engagement de l'embrayage est fixé pour être inférieur lorsque la vitesse de rotation du moteur est plus élevée.

6. Véhicule de type monté à califourchon comprenant un appareil de transmission automatique selon l'une quelconque des revendications 1 à 5.
